# EUROPÄISCHE PATENTSCHRIFT

(11) **EP 0 584 647 B1**
(45) Veröffentlichungstag und Bekanntmachung des Hinweises auf die Patenterteilung: **11.10.2000**
(21) Anmeldenummer: 93112841.7
(22) Anmeldetag: 11.08.1993
(51) Int. Cl.: H04B 10/18

(54) **Optischer Sender**
Optical transmitter
Emetteur optique

(30) Priorität: 22.08.1992 DE 4227859; 14.10.1992 DE 4234599
(43) Veröffentlichungstag der Anmeldung: 02.03.1994
(73) Patentinhaber: ALCATEL, 75008 Paris (FR)
(72) Erfinder: Krimmel, Heinz, D-70469 Stuttgart (DE); Bülow, Henning, Dr., D-70638 Ludwigsburg (DE); Heidemann, Rolf, Dr., D-71732 Tamm (DE); Otterbach, Jürgen, D-71229 Leonberg (DE)
(74) Vertreter: Rausch, Gabriele, Dr.

(56) Entgegenhaltungen:
- EP-A- 0 503 579
- EP-A- 0 504 834
- JOURNAL OF OPTICAL COMMUNICATIONS. Bd. 12, Nr. 3 , September 1991 , BERLIN DE Seiten 82 - 85 HIROSE ET AL 'Suppression of stimulated Brillouin scattering and Brillouin crosstalk by frequency-sweeping spread-spectrum scheme'
- THIRD OPTOELECTRONICS CONFERENCE, TECHNICAL DIGEST Juli 1990 , CHIBA JP Seiten 156 - 157 HIROSE ET AL 'Spread-spectrum optical fibre communications for suppressing stimulated Brillouin scattering'
- PATENT ABSTRACTS OF JAPAN vol. 16, no. 508 (E-1282)1992 & JP-A-04 188 686 (FUJITSU)
- LASER FOCUS WORLD Bd. 26, Nr. 2 , Februar 1990 , TULSA US Seiten 129 - 137 DAWSON 'AM systems bring fibre to cable television'

## Beschreibung

Die Erfindung betrifft einen optischen Sender nach dem Oberbegriff des Patentanspruchs 1 und ein Sendemodul nach dem Oberbegriff des Patentanspruchs 7.

Es ist aus G.E. Bodeep et al: "Semiconductor Lasers Versus External Modulators: A Comparison of Nonlinear Distortion for Lightwave Subcarrier CATV Applications", IEEE Photonics Technology Letters, Vol. 1, No. 11, Nov. 1989, Seiten 401 bis 403 bekannt, daß der Laser eines solchen Senders auf zwei unterschiedliche Modulationsarten amplitudenmoduliert werden kann, die beide mit Nachteilen behaftet sind.

Bei der ersten Modulationsart, einer direkten Modulation, wird der Laser elektrisch mit dem Nutzsignal moduliert. Dabei tritt neben der gewünschten Amplitudenmodulation zusätzlich eine unerwünschte Frequenzmodulation auf. Diesen Effekt bezeichnet man allgmein als Frequenzchirp. Der Frequenzchirp verbreitert die intrinsische Linienbreite des Lasers und verursacht aufgrund der Faserdispersion schon bei wenigen Kilometern Übertragungsstrecke Verzerrungen des übertragenen Signals.

Bei der zweiten Modulationsart, einer indirekten Modulation, wird der vom Laser ausgestrahlte Träger optisch durch einen dem Laser nachgeschalteten Intensitätsmodulator mit dem Nutzsignal moduliert. Der Laser strahlt dabei mit konstanter Leistung, so daß der Frequenzchirp vermieden wird. Die maximale übertragbare Leistung eines nach diesem Prinzip arbeitenden Senders wird allerdings durch die Brillouin-Rückstreuung in der sich an den optischen Sender anschließenden Faser der Übertragungsstrecke begrenzt. Schon bei etwa 10 mW zu übertragender Leistung ist die Auswirkung der Brillouin-Rückstreuung zu erkennen. Diese Auswirkung der Brillouin-Rückstreuung nimmt mit der spektralen Leistungsdichte und der Länge der optischen Faser der Übertragungsstrecke zu und führt ebenfalls zu einem Anstieg der Verzerrungen und des Rauschens des übertragenen Signals.

In D. Cotter et al: "Suppression of Stimulated Brillouin Scattering During Transmission of High-Power Narrowband Laser Light in Monomode Fibre", Electronics Letters, 22nd July 1982, Vol. 18, No. 15, Seiten 638 bis 640 wurde gezeigt, daß die Brillouin-Rückstreuung durch eine ständige Phasen- oder Frequenzänderung eines optischen amplitudenmodulierten Signals stark reduziert und im Idealfall ganz unterdrückt werden kann. Dazu wird angegeben, einen zusätzlichen optischen Phasenmodulator in die optische Strecke des Senders einzufügen oder einen zusätzlichen Laser zu benutzen. In den der obengenannten Quelle zugrundeliegenden Experimenten wird ein auf zwei Moden, die 270 MHz voneinander getrennt sind, strahlender Festkörperlaser verwendet. Dies ist allerdings nur im Dispersionsminimum der Faser sinnvoll.

In "Suppression of Stimulated Brillouin Scattering and Brillouin Crosstalk by Frequency-Sweeping Spread-Spectrum Scheme von A. Hirose et al, Journal Of Optical Communications, Bd. 12, Nr. 3, September 1991, Berlin DE, Seiten 82-85 wird beschrieben, wie die Brillouin-Rückstreuung reduziert wird, indem ein Träger in einem Laser direkt mit einem Sinus-Signal moduliert und damit das Spektrum des Trägers verbreitert wird. Anschließend wird der Träger mit dem Nutzsignal mittels eines Intensitätsmodulators amplitudenmoduliert

Es ist eine Aufgabe der vorliegenden Erfindung, die Verzerrungen eines über eine optische Faser zu übertragenden Signals zu reduzieren.

Die Aufgabe der Erfindung ist durch die Lehre der Ansprüche 1, 2 und 6 gelöst.

Vorteilhafte Ausgestaltungen der Erfindung sind den abhängigen Ansprüchen zu entnehmen.

Zum besseren Verständnis der Erfindung und ihrer Vorteile sind im folgenden Ausführungsbeispiele anhand der Zeichnungen 1 bis 5 beschrieben. Es zeigen:
- Fig. 1: einen bekannten optischen Sender mit einem Laser,
- Fig. 2: ein erstes Ausführungsbeispiel des erfindungsgemäßen optischen Senders mit einem vom Nutzsignal unabhängigen Signal zur direkten Modulation des Laser,
- Fig. 3: ein vorteilhaftes zweites Ausführungsbeispiel bei dem ein vom Nutzsignal abgeleitetes Signal zur direkten Modulation des Lasers verwendet wird,
- Fig. 4: ein drittes Ausführungsbeispiel mit einem erfindungsgemäßen Sendemodul bestehend aus einem direkt modulierbaren Laser und einem optischen Verstärker und
- Fig. 5: die statische Ausgangs-Eingangsleistungskennlinie eines optischen Verstärkers.

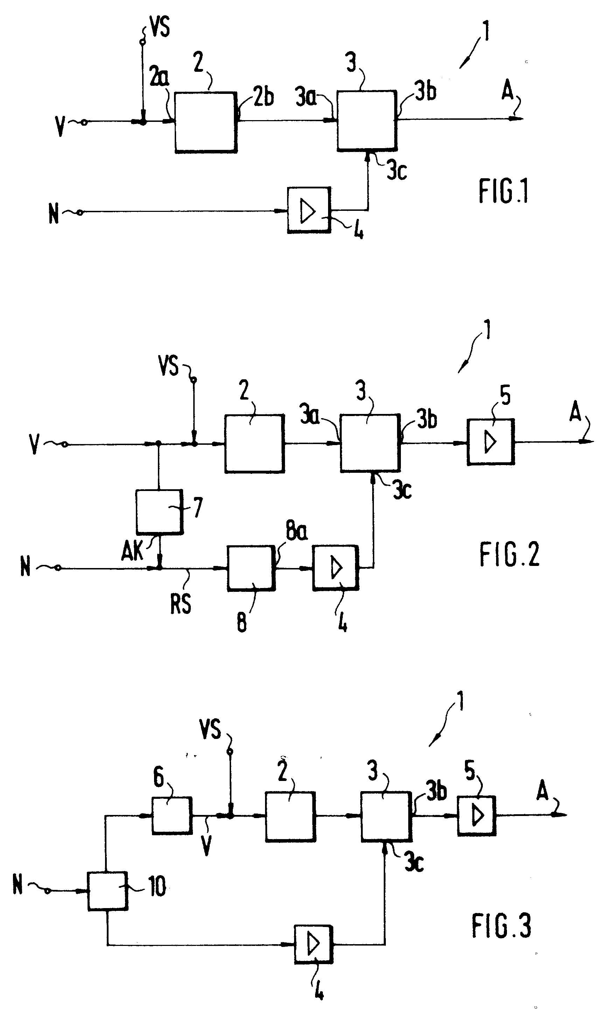

Ein in Fig. 1 abgebilder optischer Sender 1 enthält einen direkt modulierten Laser 2 und einen optischen Intensitätsmodulator 3. Der optische Eingang 3a des Intensitätsmodulators 3 ist dabei mit dem optischen Ausgang 2b des Lasers 2 verbunden. Ein Verwischungssignal V wird einem Vorstrom VS überlagert und dem Signaleingang 2a des Lasers 2 als Modulationssignal zugeführt. Diese erste Zuleitung wird im folgenden auch als Pfad zur direkten Modulation des Lasers 2 bezeichnet. In einer zweiten Zuleitung wird ein Nutzsignal N, von einem Leistungstreiberverstärker 4 verstärkt, als Modulationssignal zur indirekten Modulation auf den elektrischen Eingang 3c des Intensitätsmodulators 3 geführt. Diese zweite Zuleitung wird im folgenden auch Pfad zur indirekten Modulation des Lasers 2 genannt. das aus dem optischen Ausgang 3b des Intensitätsmodulators 3 austretende Signal ist das Ausgangssignal A des optischen Senders 1.

Der Laser 2 wird schwach mit dem Verwischungssignal V moduliert. Dies bewirkt eine geringe Verwischung der Linienbreite des Lasers 2. Verschwischung bedeutet dabei, daß ständig Wellenlängenänderungen des Lasers 2 vorhanden sind. Sie müssen so gering sein, daß ihre Auswirkung auf das übertragene Signal aufgrund der Faserdispersion niedrig gehalten wird. Die Wellenlängenänderungen liegen beispielsweise in der Größenordnung von 4 pm/mA. Das Verwischungssignal V könnte im einfachsten Fall, ein von einem Quarz erzeugtes Taktsignal oder auch nur Rauschen sein. Die indirekte Modulation mit dem die Information enthaltenden Nutzsignal N wird mit dem Intensitätsmodulator 3 auf optischem Weg durchgeführt. Die indirekte Modulation des durch die schwache direkte Modulation auch frequenzmodulierten vom Laser 2 emittierten Trägers bewirkt, daß sich die Brillouin-Rückstreuung erst bei größeren zu übertragenden Leistungen oder längeren optischen Übertragungsstrecken negativ durch einen störenden Anstieg der Verzerrung und des Rauschens des übertragenen Signals bemerkbar macht.

Der verwendete Laser 2 muß wenigstens in geringem Maße winkelmodulierbar, d.h. frequenz- oder phasenmodulierbar sein. Hierfür eignet sich besonders die Verwendung eines Halbleiterlasers.

Der Intensitätsmodulator 3 sollte neben der Intensitäts- möglichst wenig zusätzliche Phasen- oder Frequenzmodulation erzeugen. In besonderer Weise ist deshalb ein Mach-Zehnder (MZ)-Interferometer geeignet.

Das Nutzsignal N ist im Ausführungsbeispiel ein analoges Breitbandsignal, wie es z.B. bei CATV Anordnungen verwendet wird. Es kann aber euch ein analoges Schmalbandsignal oder ein digitales Signal sein.

Fig. 2 zeigt ein erstes Ausführungsbeispiel der Erfindung. In der Beschreibung und in der Fig. 2 werden für gleiche oder gleichwirkende Elemente im folgenden durchweg gleiche Bezugszeichen verwendet.

Das erste Ausführungsbeispiel erfüllt mit den gleichen Komponenten des optischen Senders 1 nach Fig. 1 die gleichen Aufgaben. Zusätzlich ist das Verwischungssignal V einem ersten Kompensationsverzerrer 7 zugeführt, dessen Ausgangssignal AK dem Nutzsignal N überlagert und das daraus resultierende Signal RS einem zweiten Kompensationsverzerrer 8 zugeführt ist. Dieser zweite Kompensationsverzerrer 8 befindet sich im Pfad zur indirekten Modulation des Lasers 2, so daß sein Ausgang 8a über den Leistungstreiberverstärker 4 mit dem elektrischen Eingang 3c des Intensitätsmodulators 3 verbunden ist.

Dem optischen Ausgang 3b des Intensitätsmodulators 3 ist ein erster optischer Verstärker 5 nachgeschaltet, dessen Ausgangssignal das Ausgangssignal A des optischen Senders 1 ist.

Aufgrund der direkten Modulation des Lasers 2 mit dem Verwischungssignal V wird neben der hier erwünschten Frequenzmodulation eine unerwünschte Amplitudenmodulation bewirkt, so daß die im Ausgangssignal A enthaltene Information gegenüber der des Nutzsignals N verfälscht ist. Zur Kompensation dieser zusätzlichen Amplitudenmodulation wird der erste Kompensationsverzerrer 7 benutzt. Er erzeugt ein geeignetes Signal, welches über die indirekte Modulation des Trägers die unerwünschte direkte Amplitudenmodulation kompensiert. Um eine bessere Abgleichmöglichkeit zu haben, kann es notwendig sein, zusätzlich in den Pfad zur direkten Modulation des Lasers 2 einen weiteren in Fig. 2 nicht eingezeichneten Kompensationsverzerrer hinzuzufügen.

Die Kennlinie eines als Intensitätsmodulator 3 benutzten Mach-Zehnder-Interferometers hat eine unerwünschte Nichtlinearität, die zu einer verfälschten indirekten Modulation führt und vorallem aus Verzerrungen 2. und 3. Ordnung resultiert. Wählt man als Arbeitspunkt des Intensitätsmodulators 3 vorteilhafterweise einen Wendepunkt der Kennlinie, so ist die Verzerrung zweiter Ordnung nahezu null. Zur Kompensation der Verzerrung 3. Ordnung wird der zweite Kompensationsverzerrer 8 in die Anordnung eingefügt. Es ist neben der in Fig. 2 dargestellten Weise auch möglich, diesen zweiten Kompensationsverzerrer 8 im Pfad zur direkten Modulation des Lasers 2 anzuordnen. Der Aufbau des zweiten Kompensationsverzerrers 8 müßte dann natürlich anders geartet sein.

Neben der Kompensation der Verzerrung 3. Ordnung des Intensitätsmodulators 3 kann der zweite Kompensationsverzerrer 8 auch zur Kompensation von Nichtlinearitäten weiterer optischer Komponenten des Übertragungssystems ausgelegt werden. Diese können sich sowohl innerhalb des optischen Senders 1 befinden, wie z.B. der Laser 2 oder der erste optische Verstärker 5, als auch außerhalb des optischen Senders 1 angeordnet sein, wie z.B. die optische Faser der Übertragungsstrecke.

Weiterhin ist die elektrische Modulationsspannung, die das Mach-Zehnder-Interferometer zur Modulation des optischen Lasersignals benötigt, recht hoch (ca. 6 bis 12 V_{SS}), so daß das Nutzsignal N, bevor es zum Intensitätsmodulator 3 geführt wird, zunächst von einem Leistungstreiberverstärker 4 auf den geforderten Spannungspegel verstärkt wird.

Um die Nachteile der im Vergleich zu einem Festkörperlaser geringeren Halbleiterlaserausgangsleistung und der Modulatoreinfügedämpfung im Arbeitspunkt des Intensitätsmodulators 3 egalisieren zu können, ist dem optischen Ausgang 3b des Intensitätsmodulators 3 der erste optische Verstärker 5 nachgeschaltet. Dieser erzeugt ein Ausgangssignal A des optischen Senders 1 mit einer hohen optischen Ausgangsleistung und kann z.B. ein Erbium-dotierter faseroptischer Verstärker (EDFA) oder ein anders dotierter faseroptischer Verstärker sein.

Weitere Treiberverstärkerelemente und Elemente zum Laufzeitausgleich wurden übersichtlichkeitshalber weggelassen.

Fig. 3 zeigt ein vorteilhaftes zweites Ausführungsbeispiel der Erfindung. Es werden wiederum für gleiche oder gleichartige Elemente durchweg gleiche Bezugszeichen verwendet.

Das zweite Ausführungsbeispiel erfüllt mit den gleichen Komponenten der vorhergehenden Ausführungsbeispiele die gleichen Aufgaben. Das Nutzsignal N ist auf einen Teiler 10 geführt, der es über den Leistungstreiberverstärker 4 auf den elektrischen Eingang 3c des Intensitätsmodulators 3 und, in seiner Amplitude reduziert, zusätzlich auf einen dritten Kompensationsverzerrer 6 weiterleitet, der in seiner Wirkung dem zweiten Kompensationsverzerrer 8 aus Ausführungsbeispiel 2 entspricht. Das Ausgangssignal des Kompensationsverzerrers 6 ist hier das Verwischungssignal V, das aus dem Nutzsignal N abgeleitet ist. Dem optischen Ausgang 3b des Intensitätsmodulators 3 ist, wie im ersten Ausführungsbeispiel, ein erster optischer Verstärker 5 nachgeschaltet. Dieser hat, wie bereits oben erwähnt, die Aufgabe die Laserausgangsleistung auf einen höheren Pegel zu verstärken. Weitere Laufzeit- und Verstärkungsglieder sind in Fig. 3 nicht mit aufgeführt.

Der dritte Kompensationsverzerrer 6 erzeugt ein Signal zur Kompensation der Nichtlinearität der Kennlinie des Intensitätsmodulators 3, so daß die durch die direkte Modulation erzeugte Amplitudenmodulation im Gegensatz zum zweiten Ausführungsbeispiel effektiv genutzt wird. Ein weiterer Vorteil der Anordnung des Kompensationsverzerrers 6 im Pfad zur direkten Modulation des Lasers 2 ist die Entlastung des in dieser Anwendung stark beanspruchten Leistungstreiberverstärkers 4. Dieser muß hohen Ansprüchen an die Linearität 2. und 3. Ordnung genügen und gleichzeitig die verhältnismäßig hohe Modulationsspannung des Intensitätsmodulators 3 liefern, da er hier die zur Kompensation der Nichtlinearität der Kennlinie des Intensitätsmodulators 3 benötigte Korrekturleistung nicht erbringen muß, kann er daher schwächer ausgelegt werden oder weist durch geringere Aussteuerung eine höhere Signallinearität auf. Die direkte Modulation mit dem Verwischungssignal V verfolgt damit in diesem Fall gleichzeitig zwei Ziele, die sich mit der erfindungsgemäßen Anordnung dieses Ausführungsbeispiels einfach und effektiv verwirklichen lassen.

Um auch hier eine bessere Abgleichmöglichkeit zu errreichen, kann es sinnvoll sein, sowohl in den Pfad zur direkten als auch in den Pfad zur indirekten Modulation des Lasers 2 Kompensationsverzerrer einzusetzen, die in der Fig. 3 nicht eingezeichnet sind.

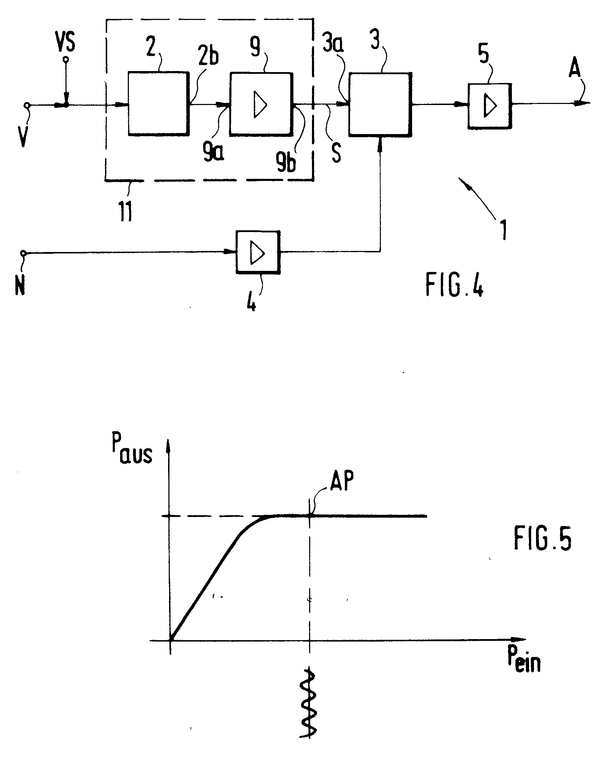

Fig. 4 zeigt ein weiteres, vorteilhaftes drittes Ausführungsbeispiel der Erfindung. Es werden wiederum für gleiche oder gleichartige Elemente durchweg gleiche Bezugszeichen verwendet.

Das dritte Ausführungsbeispiel erfüllt mit den gleichen Komponenten der vorhergehenden Ausführungsbeispiele die gleichen Aufgaben. Das dem Vorstrom VS überlagerte Verwischungssignal V zur direkten Modulation wird hier auf ein Sendemodul 11, bestehend aus dem Laser 2 und einem zweiten optischen Verstärker 9, geführt. Ein solches Sendemodul 11 kann ein auf diese beiden Bauelemente abgestimmtes, verfügbares Modul darstellen, das auch für andere optische Sender als den in dem vorhergehenden Ausführungsbeispiel beschriebenen, eingesetzte werden kann. Der zweite optische Verstärker 9 ist hier ein faseroptischer Verstärker, der u.a. ein mit Er³⁺-Ionen dotiertes lichtverstärkendes Faserstück und eine Pumplichtquelle zum Anregen der Er³⁺-Ionen enthält. Er kann aber auch ein optischer Halbleiterverstärker oder ein anders gearteter optischer Verstärker sein, der in der Sättigung betreibbar ist. Der zweite optische Verstärker 9 ist dem optischen Ausgang des Lasers 2 nachgeschaltet und im Ausführungsbeispiel in die optische Strecke zwischen Laser 2 und Intensitätsmodulator 3 eingefügt, so daß sein Eingang 9a mit dem optischen Ausgang 2b des Lasers 2 und sein Ausgang 9b mit dem optischen Eingang 3a des Intensitätsmodulators 3 verbunden ist.

Der erfindungsgemäße Einsatz des Sendemoduls 11 in den optischen Sender 1, wie in diesem Ausführungsbeispiel gezeigt, ermöglicht auf einfache Weise eine Unterdrückung der durch die direkte Modulation des Lasers 2 erzeugten unerwünschten Amplitudenmodulation. Der zweite optische Verstärker 9 wird dazu in der Sättigung betrieben, d.h. man wählt auf seiner statischen Ausgangs-Eingangsleistungskennlinie nach Fig. 5 einen Arbeitspunkt AP, der im Sättigungsbereich liegt, so daß schwache Eingangsleistungsänderungen keine Änderungen der Ausgangsleistung des zweiten optischen Verstärkers 9 nachsichziehen. Die Pumpleistung seiner Pumplichtquelle ist dann ausgeschöpft. Der Arbeitspunkt AP wird daher mit der Einstellung der Pumplichtquelle und über den Vorstrom VS mit der Wahl der Leistung des Eingangssignals des optischen Verstärkers 9 entsprechend dieser Forderung eingestellt. Ein statisches Verhalten des zweiten optischen Verstärkers 9 liegt dann vor, wenn die Frequenz des Verwischungssignals V und damit die Frequenz der Eingangsleistungsänderung des zweiten optischen Verstärkers 9 viel kleiner als der Kehrwert der mittleren Lebensdauer der durch das Pumplicht der Pumplichtquelle angeregten Energiezustände der lichtverstärkenden Substanz des zweiten optischen Verstärkers 9 gewählt wird, also im Fall eines Erbium-dotierten faseroptischen Verstärkers (EDFA) unterhalb von 1 MHz liegt. Um ein gutes Sättigungsverhalten des zweiten optischen Verstärkers 9 zu erhalten, sollte die Frequenz des Verwischungssignals V möglichst klein sein. Andererseits ist es nicht möglich, sie beliebig klein zu machen, da die Frequenz und die Amplitude des Verwischungssignals V das Frequenzchirpverhalten bestimmen. Je kleiner man daher die Frequenz wählt, deste größer muß die Amplitude sein, um weitherin das notwendige Frequenzchirpverhalten zur Reduzierung der Brillouin-Rückstreuung gewährleisten zu können. Je größer allerdings die Amplitude ist, desto schlechter wird wiederum das Sättigungsverhalten des zweiten optischen Verstärkers 9. Frequenzen im Bereich einiger kHz haben sich unter Berücksichtigung der genannten Randbedingungen als besonders vorteilhaft erwiesen.

Die aufgrund des Frequenzchirps entstehende Frequenzmodulation bleibt durch einen solchen Einsatz des zweiten optischen Verstärkers 9 unbeeinflußt. Das Ausgangssignal 5 des Sendemoduls 11 stellt daher im Idealfall ein ausschließlich frequenzmoduliertes Signal dar, das bestens zur Reduzierung der in der Faser der Übertragungsstrecke auftretenden Brillouin-Rückstreuung verwendet werden kann.

## Patentansprüche

1. Optischer Sender (1) für ein Nachrichtenübertragungssystem, in dem ein von einem Laser (2)-erzeugter Träger mit einem Nutzsignal (N) moduliert wird und dieser Träger als erstes Mittel zur Reduzierung von Verzerrungen durch stimulierte Brillouinstreuung eines Ausgangssignals (A) des optischen Senders (1) im Laser (2) direkt mit einem Verwischungssignal (v) moduliert wird, **dadurch gekennzeichnet,** daß der optische Sender (1) wenigstens ein weiteres Mittel (7, 8) zur Reduzierung von Verzerrungen des Ausgangssignals (A) des optischen Senders (1) hat, und daß das weitere Mittel (7,8) aus dem Verwischungssignal (V) ein Kompensationssignal (AK) erzeugt, mit dem der Träger zusätzlich zu dem Nutzsignal (N) extern moduliert wird.

2. Optischer Sender nach Anspruch 1, dadurch gekennzeichnet, daß das wenigstens eine weitere Mittel (7, 8) ein Mittel zur Kompensation der bei der direkten Modulation mit dem Verwischungssignal (V) entstehenden Amplitudenmodulation des Trägers ist.

3. Optischer Sender einem der vorhergehenden Ansprüche, dadurch gekennzeichnet, daß das Verwischungssignal (V) zusätzlich dem wenigstens einen weiteren Mittel (1) zur Kompensation der bei der direkten Modulation auftretenden Amplitudenmodulation zugeführt ist, dessen Ausgangssignal mit dem Nutzsignal (N) überlagert auf den Intensitätsmodulator (3) geführt ist.

4. Optischer Sender(1) für ein Nachrichtenübertragungssystem, in dem ein von einem Laser (2) erzeugter Träger mit einem Nutzsignal (N) moduliert wird und dieser Träger als erstes Mittel zur Reduzierung von Verzerrungen durch simulierte Brillouinstreuung eines Ausgangssignals (A) des optischen Senders (1) im Laser (2) direkt mit einem Verwischungssignal (V) moduliert wird, dadurch gekennzeichnet, daß der optische Sender (1) wenigstens ein weiteres Mittel (6) zur Reduzierung von Verzerrungen des Ausgangssignals (A) des optischen Senders (1) hat und daß das weitere Mittel (6) ein Kompensationsverzerrer zur Erzeugung des Verwischungssignals (V) aus dem Nutzsignal (N) ist.

5. Optischer Sender nach Anspruch 4, dadurch gekennzeichnet, daß das Verwischungssignal (V) ein über das wenigstens eine weitere Mittel (6) vom Nutzsignal (N) abgeleitetes Signal zur Kompensation der Nichtlinearität eines Intensitätsmodulators (3) ist, in dem der Träger mit dem Nutzsignal (N) moduliert wird.

6. Optischer Sender (1) für ein Nachrichtenübertragungssystem, in dem ein von einem Laser (2) erzeugter Träger mit einem Nutzsignal (N) moduliert wird und dieser Träger als erstes Mittel zur Reduzierung von Verzerrungen durch stimulierte Brillouinstreuung eines Ausgangssignal (A) des optischen Senders (1) im Laser (2) direkt mit einem Verwischungssignal (V) moduliert wird, dadurch gekennzeichnet, daß der optische Sender (1) wenigstens ein weiteres Mittel (9) zur Reduzierung von Verzerrungen des Ausgangssignals (A) des optischen Senders (1) hat, und daß das weitere Mittel (9) ein in Sättigung arbeitender optischer Verstärker ist, der dem Laser (2) zur Reduzierung von Amplitudenschwankungen des Trägers nachgeschaltet ist.

7. Optischer Sender (1) nach Anspruch 6, dadurch gekennzeichnet, daß die Frequenz des Verwischungssignals (V) kleiner ist als der Kehrwert der mittleren Lebensdauer der durch ein von einer im optischen Verstärker (9) integrierten Pumplichtquelle erzeugtes Pumplicht angeregten Energiezustände der lichtverstärkenden Substanz des optischen Verstärkers (9).

8. Optischer Sender (1) nach Anspruch 1, dadurch gekennzeichnet, daß der optische Verstärker (9) in einem sich im Sättigungsbereich liegenden Arbeitspunkt (AP) seiner statischen Ausgangs-Eingangsleistungskennlinie betrieben wird.

9. Optischer Sender (1) nach Anspruch 6, dadurch gekennzeichnet, daß der optische Verstärker (9) ein faseroptischer Verstärker ist.

## Claims

1. Optical transmitter (1) for a communications system, in which a carrier generated by a laser (2) is modulated with a useful signal (N) and this carrier, as the first means for reducing distortions due to stimulated Brillouin scattering of an output signal (A) of the optical transmitter (1) in the laser (2), is directly modulated with an energy-dispersing signal (V), characterised in that the optical transmitter (1) has at least one additional means (7, 8) for reducing distortions of the output signal (A) of the optical transmitter (1), and that the additional means (7, 8) generate from the energy-dispersing signal (V) a compensation signal (AK) with which the carrier is externally modulated in addition to the useful signal (N).

2. Optical transmitter according to Claim 1, characterised in that at least one additional means (7, 8) is a means for compensating the amplitude modulation of the carrier resulting from the direct modulation with an energy-dispersing signal (V).

3. Optical transmitter according to one of the preceding Claims, characterised in that the energy-dispersing signal (V) is also applied to at least one additional means (7) for compensating the amplitude modulation occurring during the direct modulation, and the output signal of said additional means is superimposed on the useful signal (N) and is applied to the intensity modulator (3).

4. Optical transmitter (1) for a communications system in which a carrier generated by a laser (2) is modulated with a useful signal (N) and this carrier, as the first means for reducing distortions due to stimulated Brillouin scattering of an output signal (A) of the optical transmitter (1) in the laser (2), is directly modulated with an energy-dispersing signal (V), characterised in that the optical transmitter (1) has at least one additional means (6) for reducing distortions of the output signal (A) of the optical transmitter (1), and that the additional means (6) is a predistortion circuit for generating the energy-dispersing signal (V) from the useful signal (N).

5. Optical transmitter according to Claim 4, characterised in that the energy-dispersing signal (V) is a signal derived from the useful signal (N) via the at least one additional means (6), and serving to compensate the non-linearity of an intensity modulator (3) in which the carrier is modulated with the useful signal (N).

6. Optical transmitter (1) for a communications system, in which a carrier generated by a laser (2) is modulated with a useful signal (N) and this carrier, as first means for reducing distortions due to stimulated Brillouin scattering of an output signal (A) of the optical transmitter (1) in the laser (2), is directly modulated with an energy-dispersing signal (V), characterised in that the optical transmitter (1) has at least one additional means (9) for reducing distortions of the output signal (A) of the optical transmitter (1), and that the additional means (9) is an optical amplifier operating in saturation, that is connected downstream of the laser (2) to reduce amplitude fluctuations of the carrier.

7. Optical transmitter (1) according to Claim 6, characterised in that the frequency of the energy-dispersing signal (V) is lower than the reciprocal value of the average lifespan of the energy states of the light-amplifying substance of the optical amplifier (9) stimulated by the pumped light of the pumped light source integrated in the optical amplifier (9).

8. Optical transmitter (1) according to Claim 7, characterised in that the optical amplifier (9) is operated at an operating point (AP) in the saturation region of its static output/input characteristic.

9. Optical transmitter (1) according to Claim 6, characterised in that the optical amplifier (9) is a fibre optic amplifier.

## Revendications

1. Emetteur optique (1) pour un système de transmission de messages, dans lequel une porteuse générée par un laser (2) est modulée avec un signal utile (N) et cette porteuse est modulée directement avec un signal de brouillage (v) comme des premiers moyens de réduction de distorsions par diffusion de Brillouin stimulée d'un signal de sortie (A) de l'émetteur optique (1) dans le laser (2), caractérisé en ce que l'émetteur optique (1) dispose d'au moins un moyen supplémentaire (7, 8) pour réduire des distorsions du signal de sortie (A) de l'émetteur optique (1), et en ce que les moyens supplémentaires (7, 8) génèrent un signal de compensation (AK) à partir du signal de brouillage (V) avec lequel la porteuse est modulée de façon externe en plus du signal utile (N).

2. Emetteur optique selon la revendication 1, caractérisé en ce que ledit au moins un moyen supplémentaire (7) est un moyen pour compenser la modulation d'amplitude de la porteuse qui se produit lors de la modulation directe du signal de brouillage (V).

3. Emetteur optique selon l'une quelconque des revendications précédentes, caractérisé en ce que le signal de brouillage (V) est amené en outre audit au moins un moyen supplémentaire (7) pour compenser la modulation d'amplitude qui se produit lors de la modulation directe, dont le signal de sortie est amené au modulateur d'intensité (3), le signal utile (N) lui étant superposé.

4. Emetteur optique (1) pour un système de transmission de messages, dans lequel une porteuse générée par un laser (2) est modulée avec un signal utile (N) et cette porteuse est modulée directement avec un signal de brouillage (V) comme des premiers moyens de réduction de distorsions dues à une diffusion de Brillouin simulée d'un signal de sortie (A) de l'émetteur optique (1) dans le laser (2), caractérisé en ce que l'émetteur optique (1) dispose d'au moins un moyen supplémentaire (6) pour réduire des distorsions du signal de sortie (A) de l'émetteur optique (1) et en ce que le moyen supplémentaire (6) est un générateur de distorsion de compensation pour générer le signal de brouillage (V) à partir du signal utile (N).

5. Emetteur optique selon la revendication 4, caractérisé en ce que le signal de brouillage (V) est un signal dérivé du signal utile (N) par l'intermédiaire dudit au moins un moyen supplémentaire (6), pour compenser la non-linéarité d'un modulateur d'intensité (3) dans lequel la porteuse est modulée avec le signal utile (N).

6. Emetteur optique (1) pour un système de transmission de messages, dans lequel une porteuse générée par un laser (2) est modulée avec un signal utile (N) et cette porteuse est modulée directement avec un signal de brouillage (V) comme des premiers moyens de réduction de distorsions dues à une diffusion de Brillouin stimulée d'un signal de sortie (A) de l'émetteur optique (1) dans le laser (2), caractérisé en ce que l'émetteur optique (1) dispose d'au moins un moyen supplémentaire (9) pour réduire des distorsions du signal de sortie (A) de l'émetteur optique (1) et en ce que le moyen supplémentaire (9) est un amplificateur optique fonctionnant en saturation, qui est placé en aval du laser (2) pour réduire des variations d'amplitude de la porteuse.

7. Emetteur optique (1) selon la revendication 6, caractérisé en ce que la fréquence du signal de brouillage (V) est inférieure à la valeur réciproque de la durée de vie moyenne des états d'énergie excités par la lumière de pompage générée par une source de lumière de pompage intégrée dans l'amplificateur optique (9) de la substance amplifiant la lumière de l'amplificateur optique (9).

8. Emetteur optique (1) selon la revendication 7, caractérisé en ce que l'amplificateur optique (9) est exploité à un point de fonctionnement dynamique (AP) situé dans la zone de saturation de sa courbe caractéristique de puissance d'entrée/sortie statique.

9. Emetteur optique (1) selon la revendication 6, caractérisé en ce que l'amplificateur optique (9) est un amplificateur à fibre optique.
